# EUROPÄISCHE PATENTSCHRIFT

(11) **EP 3 795 839 B1**
(45) Veröffentlichungstag und Bekanntmachung des Hinweises auf die Patenterteilung: **02.11.2022**
(21) Anmeldenummer: 21154598.3
(22) Anmeldetag: 28.09.2017
(51) Int. Cl.: F04D 19/04, F04D 29/66, B23K 26/00, G01M 1/34, B23K 26/0622, B23K 26/082, B23K 26/352, B23K 26/361, B23K 26/362, B23K 101/04, B23K 101/20

(54) **VERFAHREN ZUM WUCHTEN EINES ROTORS EINER VAKUUMPUMPE**
METHOD FOR BALANCING A ROTOR OF A VACUUM PUMP
PROCÉDÉ D'ÉQUILIBRAGE D'UN ROTOR D'UNE POMPE À VIDE

(43) Veröffentlichungstag der Anmeldung: 24.03.2021
(62) Teilanmeldung aus: 17193844.2
(73) Patentinhaber: PFEIFFER VACUUM GMBH, 35614 Asslar (DE)
(72) Erfinder: Wirth, Adrian, 35582 Wetzlar (DE); Hofmann, Andreas, 61231 Bad Nauheim (DE); Hergeth, Max, 35584 Wetzlar (DE); Rippl, Andreas, 35578 Wetzlar (DE); Hartmann, Andreas, 35641 Schöffengrund (DE); Kruse, Arthur, 35396 Gießen (DE); Kahl, Joachim, 35584 Wetzlar (DE); Wielsch, Pascal, 35625 Hüttenberg (DE); Wissner, Jürgen, 35466 Rabenau/Londorf (DE); Marx-Mankel, Kornelia, 35614 Asslar (DE); Schüler, Andreas, 35398 Gießen (DE); Franziska, Zapf, 35576 Wetzlar (DE); Reuter, Mark, 35510 Butzbach (DE)
(74) Vertreter: Manitz Finsterwald Patent- und Rechtsanwaltspartnerschaft mbB

(56) Entgegenhaltungen:
- EP-A1- 3 139 044
- EP-A2- 2 916 009
- WO-A1-2007/006356
- JP-A- S 582 719

## Beschreibung

Die vorliegende Erfindung betrifft ein Verfahren zum Wuchten eines Rotors einer Vakuumpumpe, insbesondere Turbomolekularpumpe, bei dem eine Unwucht des Rotors ermittelt wird und Material von dem Rotor mittels eines Lasers in Abhängigkeit von der ermittelten Unwucht abgetragen wird, um die Unwucht zu verringern.

Ein auszuwuchtender Rotor einer Vakuumpumpe weist häufig eine komplexe Form auf, muss jedoch meist an vielen Stellen der komplexen Form bearbeitet werden, damit die Unwucht zuverlässig minimiert wird und damit die Vakuumpumpe zuverlässig und langlebig bei hohen Drehzahlen arbeiten kann. Auch ist eine hohe Präzision der Bearbeitung wünschenswert, um eine minimale Restunwucht zu erreichen.

Die EP 3 139 044 A offenbart ein Verfahren mit den Merkmalen des Oberbegriffs des Anspruchs 1. Die EP 2 916 009 A beschreibt ein ähnliches Verfahren.

Es ist eine Aufgabe der Erfindung, ein Verfahren der eingangs genannten Art zu verbessern, insbesondere komplex geformte Rotoren zuverlässig und/oder präzise, insbesondere automatisch, auszuwuchten.

Diese Aufgabe wird durch ein Verfahren mit den Merkmalen des Anspruchs 1 gelöst.

Für den Laser kann gemäß einer Ausführungsform des Verfahrens eine Grobausrichtung und eine Feinausrichtung durchgeführt werden, wobei die

Grobausrichtung ein Ausrichten des Strahls auf einen Flächenabschnitt des Rotors umfasst, der zur Materialabtragung vorgesehen ist, wobei die Grobausrichtung mittels zumindest eines ersten Spiegels durchgeführt wird, der relativ zum Rotor translatorisch bewegt wird, und wobei bei der Feinausrichtung die Ausrichtung des Strahls ausgehend von der Grobausrichtung variiert wird, um ein gezieltes Abtragen des Materials im Bereich des Flächenabschnitts zu bewirken. Die beigefügten Ansprüche beziehen sich auf diese an sich unabhängige Lösung lediglich in abhängiger Form.

Hierdurch können verschiedene Stellen an einem Rotor zuverlässig vom Laserstrahl erreicht werden. Dies ermöglicht also eine insgesamt hohe Wuchtgüte, insbesondere da die verschiedenen Stellen so ausgewählt werden können, dass auch eine dynamische Unwucht des Rotors wirksam verringert werden kann.

Ein axialer Bereich des Rotors, in dem ein Materialabtrag vorgesehen ist, wird auch als Wuchtebene bezeichnet. Durch die Erfindung können verschiedene Wuchtebenen mit dem Laser angesteuert und bearbeitet werden.

Allgemein bezieht sich der Begriff "Unwucht" auf die Summe der bei einer Drehung des Rotors wirkenden Kräfte aufgrund der Fliehkraft einer um die Drehachse unsymmetrisch verteilten Rotormasse. Diese Kräfte werden erfindungsgemäß durch eine gezielte lokale Abtragung von Rotormaterial verringert. Dadurch wird eine die Unwucht erzeugende ungleichmäßige Massenverteilung des Rotors minimiert.

Der Begriff "translatorisch" erfordert hier zumindest eine translatorische Bewegungskomponente. Beispielsweise kann auch ein Schwenken des Spiegels, insbesondere um eine Achse außerhalb eines Körpers des Spiegels, eine translatorische Komponente aufweisen. Der Spiegel befindet sich nach der Translation an einem anderen Ort relativ zum Rotor. Hierdurch können verschiedene Wuchtebenen zuverlässig erreicht werden. Zusätzlich kann der erste Spiegel bei Bedarf beispielsweise auch rotatorisch bewegbar angeordnet sein und - so erforderlich - entsprechend bewegt werden.

Eine Materialabtragung mittels Laser wird auch als Laserablation bezeichnet. Dabei wird das, insbesondere metallische, Material des Rotors lokal so stark erhitzt, dass ein Schmelzaustrieb mit Verdampfen und/oder Sublimation eintritt.

Ein präzise und wirksam ausgewuchteter Rotor lässt sich durch Auswuchten bei verschiedenen Drehzahlen erreichen, also durch Ermitteln von einer Unwucht bei verschiedenen Drehzahlen und jeweils anschließendes Abtragen von Material zur Verringerung der Unwucht.

Der Laser kann vorzugsweise gepulst, insbesondere mit einer Pulsdauer im Nanosekundenbereich, insbesondere bis Pikosekundenbereich, betrieben werden. Der Laser kann beispielsweise als Faser-, Dioden-, Festkörper-, oder Gaslaser ausgebildet sein. Strahlleistungen können vorzugsweise im Bereich von 10 bis 800 W liegen und/oder eine Pulsfrequenz oder Repetitionsrate des Lasers kann vorzugsweise zwischen 500 Hz und dem Megaherzbereich liegen.

Der erste Spiegel kann beispielsweise verschwenkt werden, insbesondere um eine eigene Achse, was im Folgenden auch als Drehen bezeichnet wird, oder eine Achse außerhalb eines Körpers des ersten Spiegels.

Anstelle des ersten Spiegels kann auch ein erstes Spiegelsystem vorgesehen sein, umfassend ein oder mehrere, insbesondere orientierungsfeste, Spiegel, die je nach Materialabtragungsstelle ausgewählt werden, beispielsweise dadurch, dass der Strahl wahlweise auf einen der Spiegel des ersten Spiegelsystems gerichtet wird. Dies kann zum Beispiel durch wenigstens einen zweiten, insbesondere in Verbindung mit einem dritten, insbesondere für die Feinausrichtung vorgesehenen Spiegel erfolgen. In diesem Fall nehmen also Feinausrichtmittel an der Grobausrichtung Teil. Die Grobausrichtung kann hierdurch durch solche Mittel unterstützt werden, die ohnehin im System zur Durchführung des Verfahrens vorgesehen sind, wodurch das System einfacher und kostengünstiger ausgeführt werden kann. Beispielsweise können als zweiter und dritter Spiegel zwei sogenannte Galvospiegel eingesetzt werden. Alternativ oder zusätzlich kann der Laser und/oder eine optische Einheit für den Laser, also eine Einheit, die den Laserstrahl lenkt und/oder ausrichtet, translatorisch relativ zum ersten Spiegel oder dem ersten Spiegelsystem bewegt werden, um den Laser auf den ersten Spiegel oder das erste Spiegelsystem zu richten.

Bei einer Weiterbildung ist vorgesehen, dass der erste Spiegel mit dem Laser und/oder einer optischen Einheit für den Laser verbunden ist, sodass der erste Spiegel bei der Grobausrichtung gemeinsam mit dem Laser bzw. der optischen Einheit für den Laser translatorisch bewegt wird. Der erste Spiegel und der Laser bzw. die optische Einheit für den Laser können somit vorteilhaft als eine Bewegungseinheit, insbesondere auf einer gemeinsamen Achse, montiert werden. Außerdem wird so die relative Position vom ersten Spiegel zum Laser bzw. der optischen Einheit zuverlässig beibehalten, was zu einer präzisen Materialabtragung beiträgt. Der erste Spiegel kann dabei beispielsweise relativ zum Laser bzw. zu der optischen Einheit für den Laser bewegt, verschwenkt oder gedreht werden. Hierdurch lassen sich die verschiedensten Stellen des Rotors zuverlässig und präzise erreichen.

Die Feinausrichtung kann insbesondere mittels zumindest eines zweiten Spiegels, und insbesondere zumindest eines dritten Spiegels, insbesondere mittels ein oder mehrerer Galvospiegel, durchgeführt werden. Beispielsweise kann ein sogenannter Scanner vorgesehen sein, der mittels zweier beweglicher, insbesondere drehbarer, Spiegel, insbesondere Galvospiegel, den Laserstrahl in zwei Dimensionen oder Ebenen ausrichtet. Durch den Scanner kann der Laserstrahl gezielt und präzise - kontinuierlich oder intermittierend - über den Flächenabschnitt schraffierend gelenkt werden. Dieser wird also nach und nach mit dem Laserstrahl beaufschlagt werden.

Der Scanner kann beispielsweise eine Linse, insbesondere im Strahlengang nach den Spiegeln des Scanners, aufweisen. Das Verfahren kann beispielsweise mittels der Remote-Laser-Technologie durchgeführt werden, die einen relativ großen Abstand zwischen der Strahlquelle und dem Werkstück, also dem Rotor, erlaubt. Dies vereinfacht das Erreichen der verschiedenen Wuchtebenen durch den Laserstrahl erheblich.

Vorteilhafterweise kann vorgesehen sein, dass eine Materialabtragung nur nach einer Grobausrichtung durchgeführt wird. Grob- und Feinausrichtung können beispielsweise auch zu unterschiedlichen Zeiten durchgeführt werden.

Bei einer Ausführungsform wird bei der Grobausrichtung der Rotor gedreht, um einen für die Materialabtragung vorgesehenen Flächenabschnitt dem Spiegel zuzuwenden. Dies erlaubt es, dass für den ersten Spiegel eine einfache, insbesondere zweidimensionale, Kinematik vorgesehen werden kann. Dabei kann die Grobausrichtung in wenigstens einer Dimension durch eine Vorrichtung durchgeführt werden, die beispielsweise für das Drehen des Rotors beim Ermitteln der Unwucht ohnehin vorgesehen ist.

Der Strahl kann vorteilhafterweise, insbesondere durch die Grobausrichtung, derart ausgerichtet werden, dass sich ein für den Materialabtrag vorgesehener Flächenbabschnitt zumindest im Wesentlichen in einer Fokusebene des Strahls befindet.

Ein Materialabtrag kann beispielsweise bei im Wesentlichen atmosphärischem Druck stattfinden. Dies erlaubt die Verwendung einer einfachen Vorrichtung für ein erfindungsgemäßes Verfahren, nämlich ohne dass die Lasereinheit in einem Vakuumbereich installiert sein muss. Außerdem erleichtert auch dies die Abführung des abgetragenen Materials. Ein Materialabtrag bei im Wesentlichen atmosphärischem Druck vereinfacht auch bei den nachfolgend beschriebenen Lösungen der der Erfindung zugrunde liegenden Aufgabe das jeweilige Verfahren.

Erfindungsgemäß wird zum Abtragen des Materials der Rotor auf eine Drehzahl gebracht wird, die deutlich kleiner ist als eine beim Ermitteln der Unwucht vorgesehene Drehzahl, insbesondere wobei der Rotor zum Abtragen des Materials in Stillstand versetzt wird, d.h. die Drehzahl Null ist.

Hierdurch lässt sich eine hohe Präzision in der Materialabtragung erreichen, was eine besonders hohe Wuchtgüte des Rotors erlaubt und somit eine hohe Lebensdauer der Vakuumpumpe ermöglicht. Auch kann im Stillstand bzw. bei geringer Drehzahl das abgetragene Material einfach und vor allem gezielt von dem Bereich der Materialabtragung abgeführt werden, sodass ein unerwünschter Niederschlag des abgetragenen Materials, der zur Unwucht des Rotors beitragen würde, wirksam vermieden wird. Es hat sich dagegen gezeigt, dass abgetragenes Material von einem schnell, insbesondere bei einer Wuchtdrehzahl, rotierenden Rotor ungerichtet im Bearbeitungsraum verteilt wird. Eine anschließende Reinigung des Rotors und des Bearbeitungsraum sind hierbei sehr aufwendig. Erfindungsgemäß lässt sich dieser Aufwand wirksam vermeiden.

Diese Vorteile lassen sich beispielsweise auch durch eine lediglich langsame Drehung des Rotors erreichen. Ein solche kann außerdem vorteilhaft eingesetzt werden, um einen vergleichsweise großen Flächenabschnitt abzutragen, der eine große Erstreckung in Umfangsrichtung des Rotors aufweist. Hierdurch kann dieser Abschnitt dennoch kontinuierlich bearbeitet werden, was wiederum eine hohe Bearbeitungspräzision bei einem dennoch zügigen Verfahren ermöglicht.

Es ist vorgesehen, dass die Unwucht bei wenigstens zwei Drehzahlen des Rotors ermittelt wird, wobei nach jedem Ermitteln einer zu verringernden Unwucht für eine Drehzahl der Rotor auf die deutlich geringere Drehzahl gebracht, insbesondere in Stillstand versetzt, wird und Material vom Rotor abgetragen wird. Hierdurch werden eine präzise Bearbeitung ermöglicht und letztlich eine besonders gute Wuchtgüte erreicht.

Gemäß einer Ausführungsform des Verfahrens ist zumindest ein erstes Lagerelement vorgesehen, durch welches der Rotor beim Ermitteln der Unwucht gelagert wird, wobei das erste Lagerelement für das Abtragen des Materials von dem Rotor entfernt wird, und wobei für das Abtragen von Material zumindest ein zweites Lagerelement an den Rotor zu dessen Lagerung angebracht wird.

Der Rotor lässt sich somit im Bereich des ersten Lagerelements durch den Laserstrahl gut erreichen. Ein für den Materialabtrag vorgesehener Flächenabschnitt wird so vom ersten Lagerelement freigegeben. Dies erlaubt eine besonders flexible Wahl von für die Materialabtragung vorgesehenen Flächenabschnitten und Wuchtebenen. Im Ergebnis lässt sich auch hierdurch die Wuchtgüte weiter verbessern. Außerdem kann nun insbesondere auch ein mit dem ersten Lagerelement zusammenwirkendes, rotorseitiges Lagerelement mit dem Laser bearbeitet werden. Beispielsweise können das erste und das hiermit zusammenwirkende Lagerelement ein Magnetlager mit Magnetringen bilden, wobei insbesondere nach entfernen des ersten Lagerelements das rotorseitige Magnetlagerelement mit dem Laser bearbeitet werden kann, insbesondere zur gezielten Beeinflussung seiner magnetischen Eigenschaften lokal erwärmt werden kann.

Bei einer Weiterbildung ist das zweite Lagerelement dazu ausgebildet, den Rotor zu einer Drehung anzutreiben. Beispielsweise kann hierfür das zweite Lagerelement ein angetriebenes Reibrad aufweisen. Alternativ kann beispielsweise ein Antrieb mit formschlüssiger, magnetischer, hydraulischer und/oder pneumatischer Kraftübertragung vorgesehen sein. Beispielsweise kann ein Schrittmotor oder ein Servomotor vorgesehen sein. Über das zweite Lagerelement kann somit der Rotor einfach zur Materialabtragung rotatorisch ausgerichtet werden.

Das zweite Lagerelement kann vorteilhafterweise radial an den Rotor herangefahren werden, was einfach durchführbar ist. Das zweite Lagerelement kann beispielsweise ein Auflager für den Rotor bilden, insbesondere von zwei Lagerrollen- oder -rädern gebildet sein, zwischen denen der Rotor aufliegt. Der Rotor liegt dabei einfach auf dem zweiten Lagerelement auf, wodurch dieses einfach anbringbar ist. Aufgrund der vergleichsweise niedrigen Drehzahlen beim Materialabtrag ist dabei aber nicht zu erwarten, dass der Rotor vom Auflager abhebt oder anderweitig unerwünscht ausgelenkt wird.

Insbesondere bei einer als Turbomolekularpumpe ausgebildeten Vakuumpumpe ist das Verfahren vorteilhaft und einfach durchführbar, wenn das zweite Lagerelement zwischen zwei Rotorscheiben der Turbomolekularpumpe angebracht wird.

Gemäß einer Ausführungsform des Verfahrens wird das durch den Laser abgetragene Material mittels eines Luftstromes aus dem Bereich der Materialabtragung abgeführt.

Hierdurch kann das abgetragene Material wirksam und zuverlässig abgeführt werden. Somit kann es wirksam vermieden oder zumindest verringert werden, dass sich abgetragenes Material gleich wieder in der Nähe der Abtragung oder als Staub niederschlägt.

Bei einer Ausführungsform verläuft der Luftstrom quer zum Strahl des Lasers. Hierdurch wird abgetragenes Material zügig vom Abtragungsort abgeführt.

Der Luftstrom kann vorteilhafterweise durch eine aktive Luftzufuhr und/oder eine Absaugung erzeugt werden.

Ganz allgemein kann eine Luftströmung vorteilhaft genutzt werden, um abgetragenes Material abzuführen oder zumindest von bestimmten Bereichen fernzuhalten. So kann z.B. für einen Spiegel, der zum Umlenken oder Ausrichten des Laserstrahls vorgesehen ist, ein, insbesondere stoßweiser Luftstrom vorgesehen sein, um den Spiegel von abgetragenen Material freizuhalten oder ihn hiervon zu reinigen.

Gemäß einer Ausführungsform des Verfahrens werden eine Wegstrecke eines Strahls des Lasers gemessen und der Strahl in Abhängigkeit der gemessenen Wegstrecke ausgerichtet.

Hierdurch kann der Laser gezielt ausgerichtet werden, insbesondere um eine besonders präzise Materialabtragung zu erreichen. Durch Längenmessung der Wegstrecke kann insbesondere eine Fokusebene des Lasers präzise auf den abzutragenden Flächenabschnitt oder gezielt auf einen gewissen Abstand zu dessen Oberfläche justiert werden.

Gemäß einer Ausführungsform ist eine optische Wegmesseinrichtung vorgesehen, wobei die Wegmesseinrichtung und/oder eine optische Einheit für die Wegmesseinrichtung zum Messen der Wegstrecke des Strahls in dessen Weg eingebracht wird. Dies erlaubt eine exakte Bestimmung der Wegstrecke des Strahls, da ein Messstrahl der optischen Wegmesseinrichtung im Wesentlichen den gleichen Weg zurücklegt, wie der zu vermessende Laserstrahl.

Alternativ oder zusätzlich zu einer optischen Wegmessung kann eine akustische Messung vorgesehen sein. Als Beispiel für ein akustisches Verfahren kann die Schallemission bei der Laserablation durch Verfahren des Laserfokus relativ zur Bearbeitungsebene gemessen werden, wobei eine maximale Schallemission darauf schließen lässt, dass sich der Fokus genau auf der zu bearbeitenden Fläche befindet. Die Schallaufnahme kann beispielsweise mittels eines Mikrofons durchgeführt werden und/oder beispielsweise eine FFT-Auswertung umfassen. Alternativ kann in ähnlicher Weise auch eine beim Materialabtrag, insbesondere bei einer Plasmabildung, entstehende Strahlung ausgewertet werden, also bei maximaler Strahlung darauf geschlossen werden, dass der Fokus genau auf der Bearbeitungsebene liegt.

Besonders einfach lässt sich das Verfahren realisieren, wenn für den Laser und/oder eine optische Einheit für den Laser eine translatorische Kinematik vorgesehen ist und die Wegmesseinrichtung und/oder eine optische Einheit für die Wegmesseinrichtung mit dem Laser und/oder der optischen Einheit für den Laser verbunden ist, sodass diese eine Bewegungseinheit bilden. Dabei wird die Wegmesseinrichtung bzw. die optische Einheit für die Wegmesseinrichtung in den Weg des Strahls eingebracht, beispielsweise indem die Bewegungseinheit, insbesondere relativ zu einem für eine Grobausrichtung vorgesehenen Spiegel, bewegt wird.

Insbesondere in Verbindung mit einer Grob- und einer Feinausrichtung für den Laserstrahl kann die optische Wegmessenrichtung und/oder optische Einheit für die Wegmesseinrichtung relativ zu einem für die Grobausrichtung vorgesehenen ersten Spiegel bewegbar sein. Insbesondere kann die Bewegungseinheit relativ zum ersten Spiegel bewegbar sein.

Die vorstehend beschriebenen Verfahren und deren Ausführungsformen lassen sich vorteilhaft im Sinne der übrigen hierin beschriebenen Verfahren und Ausführungsformen weiterbilden. Die Verfahren und Ausführungsformen lassen sich insbesondere auch durch einzelne Merkmale eines anderen hierin beschriebenen Verfahrens vorteilhaft weiterbilden. So kann beispielsweise die Materialabführung mittels Luftstrom auch bei atmosphärischem Druck durchgeführt werden, ohne dass eine Grob- und Feinausrichtung durchgeführt wird.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine Vorrichtung zum Rotieren und Wuchten eines Rotors einer Turbomolekularpumpe,
- Fig. 7: ein Lasersystem zum Abtragen von Rotormaterial,
- Fig. 8: eine Materialabtragung an einem ersten Flächenabschnitt eines Rotors,
- Fig. 9: eine Materialabtragung an einem zweiten Flächenabschnitt des Rotors der Fig. 8,
- Fig. 10: eine Materialabtragung an einem dritten Flächenabschnitt des Rotors,
- Fig. 11: eine Korrektur eines Magnetlagers des Rotors,
- Fig. 12: ein Auflager für den Rotor,
- Fig. 13: eine Abführeinrichtung für vom Rotor abgetragenes Material,
- Fig. 14: eine Kinematik für ein Lasersystem mit Wegmesseinrichtung,
- Fig. 15: die Kinematik der Fig. 14 in einer Stellung, in der die Wegmesseinrichtung in den Strahlengang des Lasersystems eingefahren ist,
- Fig. 16: eine Spiegelanordnung zum Lenken eines Laserstrahls,
- Fig. 17: eine weitere Spiegelanordnung zum Lenken eines Laserstrahls,
- Fig. 18: die Spiegelanordnung der Fig. 17 in Verwendung zum Messen einer Wegstrecke des Laserstrahls,
- Fig. 19: die Spiegelanordnung der Fig 17 in einer alternativen Verwendung mit einem zur Auswahl eines jeweiligen Spiegels versetzbaren Laserstrahl,
- Fig. 20: einen Scanner und eine Spiegelanordnung für einen Laserstrahl und
- Fig. 21: den Scanner und die Spiegelanordnung der Fig. 20, wobei eine Wegmesseinrichtung in den Strahlengang eingefahren ist.

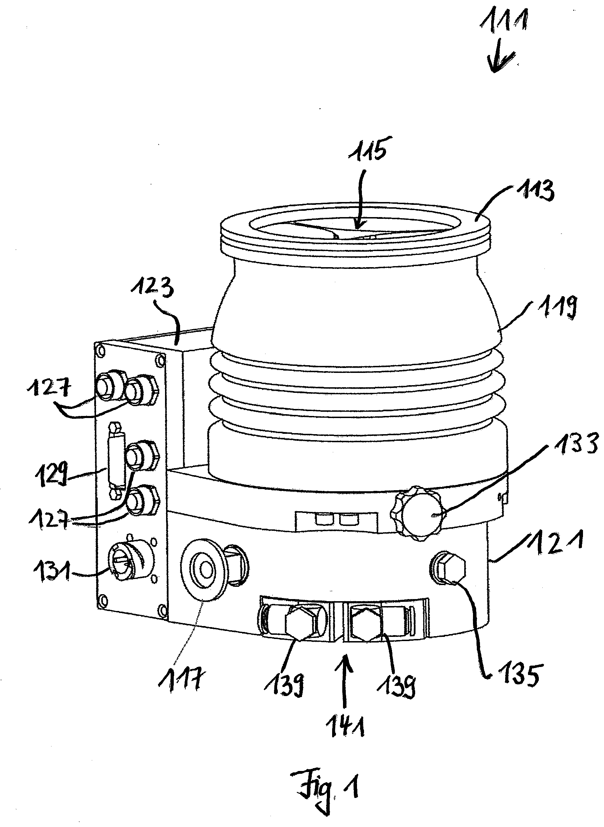

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden.

Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

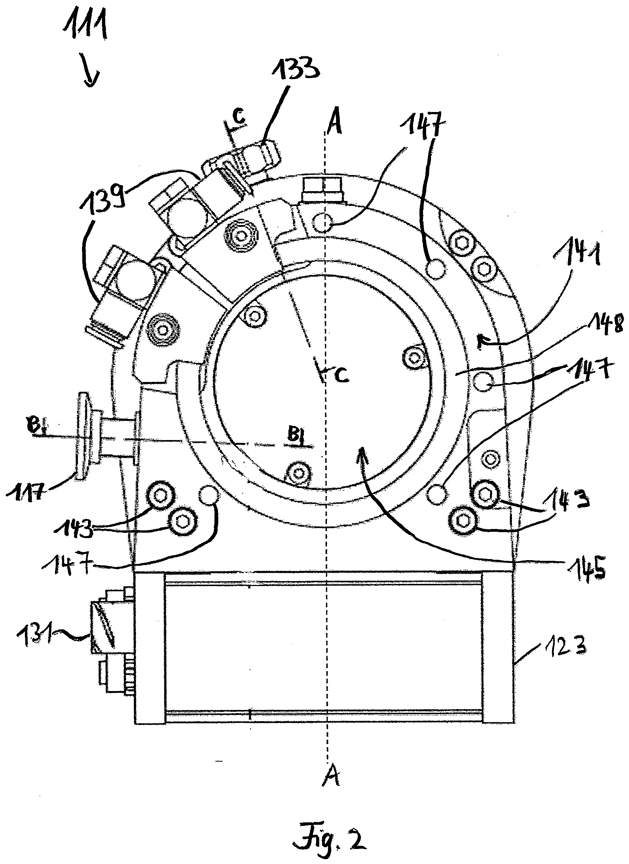

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

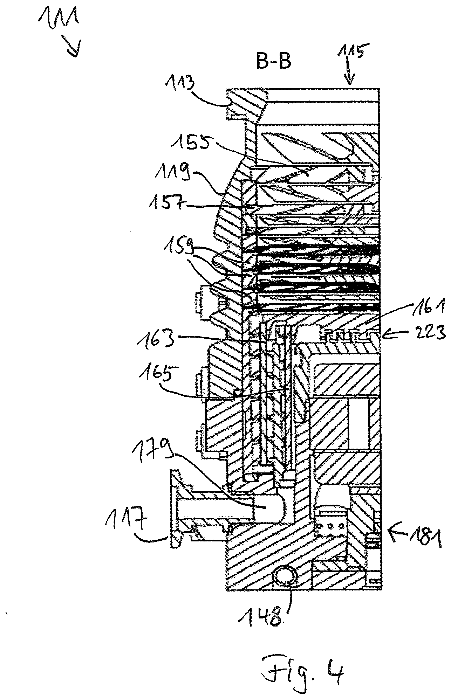

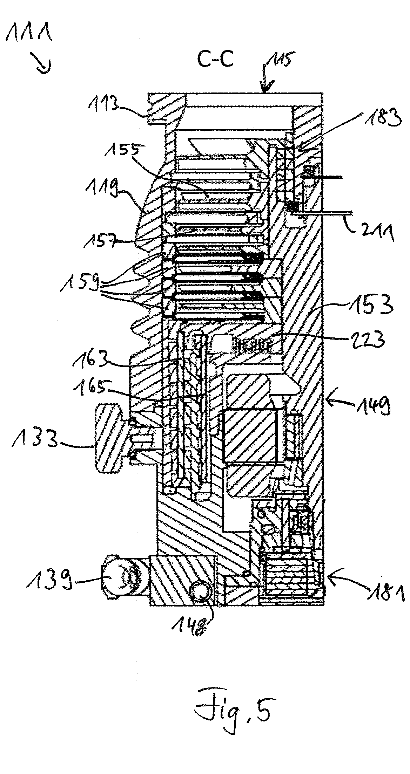

In den Figuren 2 bis 5 ist eine Kühlmittelleitung 148 dargestellt, in welcher das über die Kühlmittelanschlüsse 139 ein- und ausgeleitete Kühlmittel zirkulieren kann.

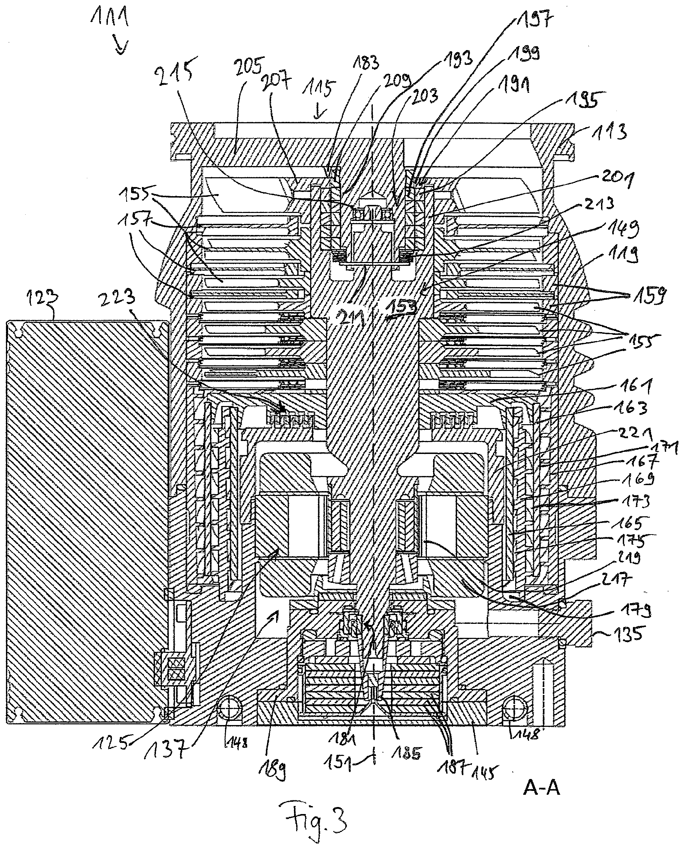

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt.

Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

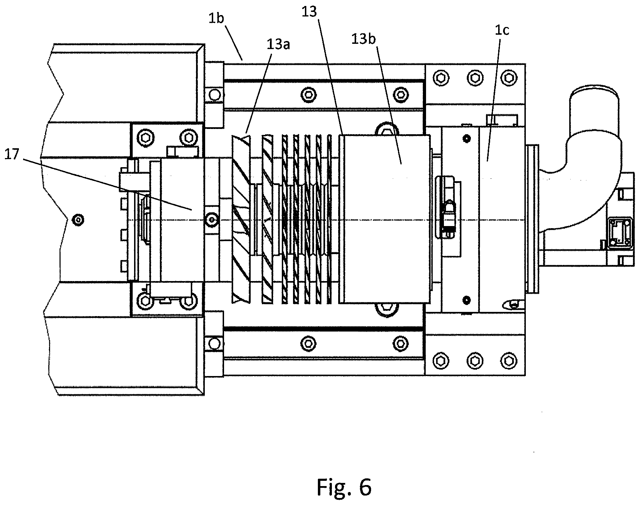

Anhand der Fig. 6 bis 21 werden nachfolgend Verfahren zum Wuchten eines Rotors einer Vakuumpumpe, wie z.B. der Vakuumpumpe 111 der Fig. 1 bis 5, veranschaulicht. Dabei ermöglicht eine Materialabtragung- bzw. ablation mittels Laser das Erreichen einer hohen Wuchtgüte in Kombination mit einer im Wesentlichen vollständigen Automatisation des Wuchtprozesses.

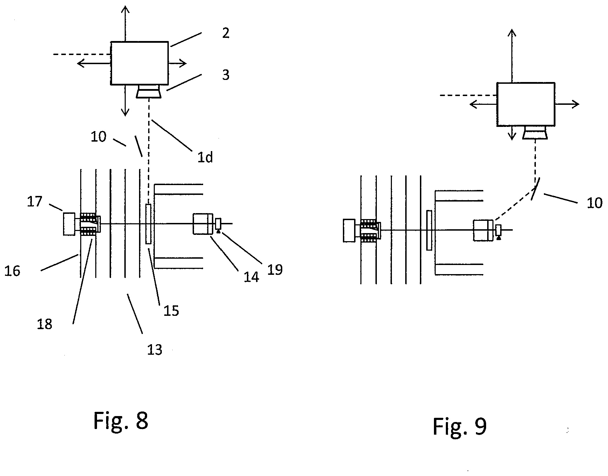

In Fig. 6 ist eine Vorrichtung 1b zum Einspannen und Rotieren eines Rotors 13 einer Turbomolekularpumpe für ein Wuchtverfahren gezeigt. Der Rotor 13 umfasst eine Mehrzahl von Turbostufen 13a, die jeweils in Umfangsrichtung verteilt angeordnete Rotorschaufeln umfassen, und als Zylinderhülsen ausgebildete Holweckstufen 13b. Die Vorrichtung 1b umfasst eine Lagerfassung 1c, nicht näher beschriebene Schwingungssensoren und/oder Abstandsmesssensoren für die Messung von Unwuchten, sowie einen Magnetlagerstator 17, der zusammen mit einem rotorseitigen Magnetlagerrotor, in den Fig. 8 bis 11 referenziert als Magnetlagerelement 18, ein Magnetlager bildet.

Zunächst erfolgt, insbesondere händisches, Einlegen oder Einspannen des Rotors 13 in die Vorrichtung 1b. Nach dem Einlegen des Rotors 13 wird eine axiale Vorspannung des Magnetlagers 17 eingestellt. Abhängig von dessen Größe wird der Rotor 13 angefahren, mit unterschiedlichen Wuchtdrehzahlen rotiert und die Materialabtragung vorgenommen. Außerdem wird bei diesem Verfahren eine Korrektur von Unregelmäßigkeit im Magnetfeld des Magnetlagers durchgeführt.

Der fertig gewuchtete Rotor 13 wird nach Erreichen der geforderten Feinwuchtgüte der Anlage entnommen, insbesondere händisch. Um einen möglichst hohen

Automatisationsgrad erreichen zu können, ist es vorteilhaft, wenn die Materialabtragung - und hier außerdem die optionale Magnetlagerkorrektur -bei sich in der Vorrichtung 1b befindlichem Rotor 13 durchgeführt wird. Zur Bestimmung der Unwucht wird der Rotor 13 mit einer vorbestimmten Drehzahl gedreht. Es können aber auch zwei oder mehr unterschiedliche Drehzahlen zur Bestimmung der Unwucht vorgesehen sein- Die Materialabtragung am Rotor 13 findet in der Regel nicht nur einmalig statt, sondern häufig iterativ, bis die gewünschte Wuchtgüte erreicht ist.

Die Unwucht wird mittels einer Sensorauswertung bestimmt. Alle Hochläufe des Rotors 13 auf eine Wuchtdrehzahl und die entsprechenden Messungen der Rotorauslenkung mit zugehöriger Winkellage finden in einer nicht gezeigten, evakuierten Vakuumkammer statt; der Rotor dreht sich also im Vakuum. Nach einem Hochlauf des Rotors und dem Erreichen einer ersten Wuchtdrehzahl im Vakuum wird der Rotor wieder abgebremst, die Vakuumkammer geöffnet und die Materialabtragung im Rotorstillstand an zuvor bestimmten Rotorwuchtebenen und Winkelpositionen vorgenommen. Nach erfolgter Materialabtragung wird der Rotor erneut im Vakuum auf die gleiche oder eine andere, insbesondere höhere, Wuchtdrehzahl beschleunigt. Die verbleibende Unwucht wird bestimmt und die Lage und Menge des abzutragenden Materials ermittelt.

Nach einem iterativen Prozess aus Rotorauslenkungsmessung bei Wuchtdrehzahlen im Vakuum und erfolgtem Materialabtrag wird schließlich die erforderliche Feinwuchtgüte bei Enddrehzahl erreicht. Der Rotor 13 kann nun vom Bedienpersonal wieder aus der Vorrichtung 1b entnommen werden.

Es hat sich als vorteilhaft erwiesen, wenn die Materialabtragung mit einem Faserlaser und/oder bei einer Wellenlänge von wenigstens 700 nm, insbesondere wenigstens 1000 nm, und/oder höchstens 1500 nm, insbesondere höchstens 1100 nm, insbesondere etwa 1064 nm und/oder mit einer Pulsdauer von wenigstens 50 ns und/oder höchstens 150 ns, insbesondere etwa 100 ns und/oder mit einer Repetitionsrate von wenigstens 20 und/oder höchstens 200 kHz und/oder im Stillstand des Rotors 13 durchgeführt wird. Alternativ können beispielsweise auch Laserquellen mit kürzeren Pulsdauern bis in den Femtosekundenbereich eingesetzt werden. Alternativ kann eine Laserquelle auch kontinuierlich betrieben werden. Allgemein kann der Laser beispielsweise als Dioden-, Faser-, Festkörper- oder Gaslaser ausgebildet sein.

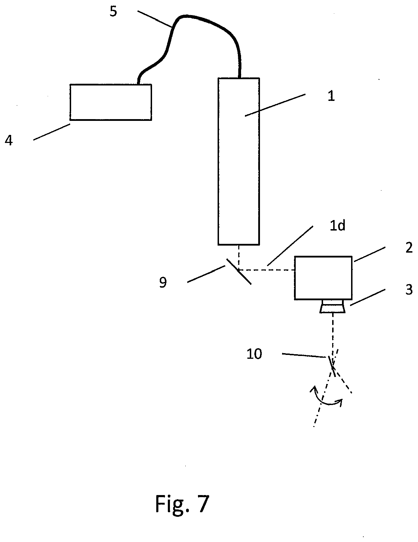

In Fig. 7 ist ein Lasersystem zum Abtragen von Rotormaterial gezeigt. Das Lasersystem umfasst einen Laser 1, der durch eine Steuereinrichtung 4 gesteuert wird, die über eine Leitung 5 mit dem Laser 1 verbunden ist. Der Laser 1 emittiert einen Strahl 1d, der von einem Scanner 2 zum Abtragen von Rotormaterial abgelenkt wird. Hierfür weist der Scanner 2 zwei nicht näher dargestellte drehbare Spiegel, sogenannte Galvospiegel, auf. Diese werden im Rahmen einer Feinausrichtung zum Abtragen von Material derart angesteuert, dass der Laser 1 rasterartig verteilte Punkte auf einem abzutragenden Flächenabschnitt am Rotor 13 beaufschlagt. Der Begriff "Scanner" bezieht sich hierbei darauf, dass der Laser 1 somit nach und nach über den Flächenabschnitt gelenkt wird und dabei Material abträgt.

Zwischen dem Laser 1 und dem Scanner 2 ist ein, insbesondere statischer Spiegel 9 vorgesehen. Dieser ermöglicht eine platzsparende Ausgestaltung des Systems.

Am Scanner 2 ist ein Objektiv 3 für den Laserstrahl 1d vorgesehen. Das Objektiv 3 weist bevorzugt eine Brennweite von mehreren Dezimetern auf, insbesondere wobei die Brennweite auch dem typischen Abstand zwischen dem Objektiv 3 und dem für die Materialabtragung vorgesehen Flächenabschnitt entspricht. In dieser Konfiguration befindet sich eine Fokusebene des Laserstrahls 1d auf dem zu bearbeitenden Flächenabschnitt.

Die Materialabtragung wird an Atmosphäre und bei stehendem Rotor 13 ausgeführt. Dies erleichtert eine Abführung von abgetragenem Material, z.B. durch einen Luftstrom. Somit kann die Kontamination einer Oberfläche des Rotors 13, die sonst durch Partikel-Strömungsverwirbelungen von abgetragenem Material hervorgerufen werden kann, stark reduziert werden.

Ein für Materialabtragung vorgesehener Flächenabschnitt weist beispielsweise eine Fläche auf, die größer als 4 mm² und/oder kleiner als 150 mm² ist. Bei dem vorliegenden Verfahren werden weder der Rotor 13 noch der Laser 1 bewegt. Hierdurch können sowohl relativ große Flächen abgetragen werden als auch eine hohe Präzision bei der Materialabtragung erreicht werden.

Beim Auswuchten gilt es, gezielt eine bestimmte Masse des Rotormaterials abzutragen. Die Masse wird durch das Abtragen eines entsprechenden Materialvolumens erzielt. Die abgetragene Fläche und die Abtragungstiefe wird dabei an die jeweils vorliegenden Bedingungen angepasst.

Vorzugsweise findet die sogenannte Remote-Laser-Technologie Anwendung, bei welcher der beim Laser 1 austretende Laserstrahl 1d über zwei Galvospiegel im Scanner 2 und über ein als Fokussieroptik ausgebildetes Objektiv 3 auf die abzutragende Fläche gelenkt wird. Das Objektiv 3 ist im vorliegenden Beispiel derart ausgebildet, dass der Strahl 1d unter einem Winkel von bis zu ca. 20° zu einer mittigen Austrittsrichtung des Laserstrahls 1d aus dem Scanner 2 austreten kann. Hierdurch kann ein relativ großer Flächenabschnitt bearbeitet werden (beispielsweise ein Flächenabschnitt von ca. 300 cm²), ohne dass die Raumlage des Lasers 1 verändert werden muss.

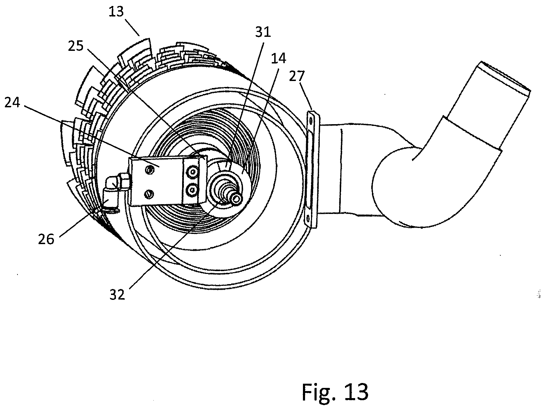

Das hierin beschriebene Wuchtverfahren erlaubt eine schnelle, homogene und reproduzierbare Materialabtragung, wodurch eine erforderliche Feinwuchtgüte schnell und zuverlässig erreicht werden kann. Dies ist insbesondere vorteilhaft bei einem flächigen Materialabtrag an einem Flächenabschnitt mit beispielsweise einer azimutalen Erstreckung zwischen 15° und 35°, wie z.B. ein in Fig. 13 gezeigter Flächenabschnitt 31.

Bei der Materialabtragung mittels Laser wird durch die Lichtintensität im Laserfokus das Material je nach Laserquelle geschmolzen, verdampft und/oder sublimiert. Dabei entsteht bei der Feinausrichtung durch schnelle Fokusablenkung über den abzutragenden Flächenabschnitt ein homogener Materialabtrag. Durch geeignete Wahl der Laserparameter lässt sich eine glatte Oberfläche an den Ablationsstellen und annähernde Gratfreiheit der Ablationssegmente erreichen.

Das Lasersystem der Fig. 7 umfasst ferner einen Spiegel 10, welcher um eine senkrecht zur Abbildungsebene stehende Achse drehbar ist. Er ist hochpräzise ansteuerbar. Dabei ist es ausreichend, wenn seine Drehung langsamer erfolgt als die Bewegungen der Spiegel des Scanners 2. Der Spiegel 10 kann den Laserstrahl 1d im Wesentlichen in beliebige Richtungen in der Abbildungsebene ablenken. Somit können mit diesem Lasersystem, insbesondere in Verbindung mit einer Translation des Lasersystems, verschiedenste abzutragende Flächenabschnitte am Rotor 13 erreicht werden.

Es könnte auch ein anderer oder zusätzlicher Schwenkfreiheitsgrad vorgesehen sein, um alle gewünschten Flächenabschnitte und Wuchtebenen zu erreichen. Allgemein ist es vorteilhaft, wenn der Laserstrahl 1d beim Materialabtrag im Wesentlichen senkrecht auf den abzutragenden Flächenabschnitt ausgerichtet ist.

Ein Hochlaufen des Rotors 13 auf eine jeweilige Wuchtdrehzahl erfolgt bei dem hier beispielhaft dargestellten Wuchtverfahren im Vakuum. Zur Materialabtragung mittels des Laser 1 wird die Vakuumkammer geflutet, der Rotor abgebremst und die Vakuumkammer geöffnet. Der Laser 1 erhält somit Zugang zum Rotor 13. Alternativ ist es denkbar, dass der Laserstrahl 1d zur Materialabtragung durch ein optisches Fenster, das insbesondere mit einer Anti-Reflexionsbeschichtung versehen ist, in die Vakuumkammer eingebracht wird.

In den Fig. 8 bis 11 ist die Materialabtragung durch einen Laserstrahl 1d an verschiedenen Wuchtebenen dargestellt.

Fig. 8 zeigt eine Materialabtragung an einer Labyrinthnabe 15 des Rotors 13. Der Laser 1 und/oder eine optische Einheit für den Laser 1, hier der Scanner 2, sind relativ zu dem Spiegel 10 bewegbar, um den Laserstrahl 1d an dem Spiegel 10 vorbei und insbesondere direkt auf einen abzutragende Flächenabschnitt auszurichten. So kann der Spiegel 10 beispielsweise zum Abtragen von Material in einer Wuchtebene von einem Flächenabschnitt am Außenumfang des Rotors 13 (hier an der Labyrinthnabe 15 oberhalb einer äußeren Holweckstufe 13b) aus dem direkt aus dem Scanner 2 vertikal austretenden Laserstrahl 1d gefahren werden. Alternativ oder zusätzlich wird der Scanner 2 geringfügig, insbesondere in horizontaler Richtung, gegenüber dem Spiegel 10 verfahren. So kann der Laserstrahl 1d den Spiegel 10 passieren, ohne durch diesen abgelenkt zu werden.

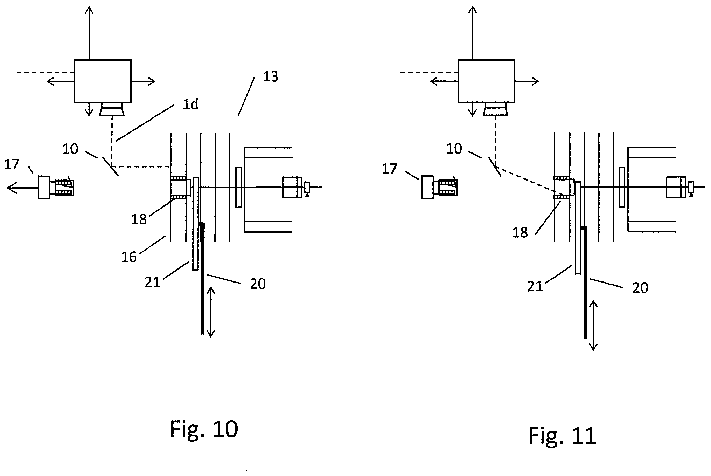

Zum gezielten Materialabtrag auf beispielsweise einer antriebsseitigen Wuchtebene, z.B. im Bereich eines sogenannten Wuchtrings 14 wird der Spiegel 10 in den Strahlengang gebracht und der Laserstrahl 1d wird auf den Wuchtring 14 gelenkt (siehe Fig. 9). Nach dem Anfahren von eingelernten Koordinaten des Spiegels 10 zum Grobausrichten des Laserstrahls 1d auf einen zur Materialabtragung vorgesehenen Flächenabschnitt verharrt der Spiegel 10 in seiner Position und der Scanner 2 beginnt ausgehend von diesem Zustand mit einer Feinausrichtung des Laserstrahls 1d, welche hier durch eine schnelle und hochgenau reproduzierbare Auslenkung des Laserstrahls 1d zur Schraffur des abzutragenden Flächenabschnitts, beispielsweise des Flächenabschnitts 31 der Fig. 13, durchgeführt wird. Der Spiegel 10 muss eine entsprechende Größe aufweisen, damit der Laserstrahl 1d im Rahmen der Feinausrichtung nicht in den Randbereich des Spiegels 10 gerät oder diesen gar verfehlt. Aufgrund verschiedener Bauteile, z.B. einer Wuchtmaschinensensorik und der Lagerfassung 19, kann es erforderlich sein, die Materialabtragung unter einem Winkel abweichend von einem zur Rotorachse senkrechten oder parallelen Strahleinfall vorzunehmen. So erfolgen beispielsweise die Materialabtragungen bei den Verfahren gemäß Fig. 9 und 11 unter einem schrägen Winkel.

Die in Fig. 10 gezeigte Anordnung veranschaulicht den Materialabtrag an einer im Betrieb des Rotors 13 vakuumseitigen Rotorscheibe 16. Alternativ oder zusätzlich können hier oder an anderen Wuchtebenen auch Markierungen, Beschriftungen, Logos und/oder dergleichen mittels des Laserstrahls 1d aufgebracht werden. In dieser Position verläuft der Laserstrahl 1d nach Reflexion am Spiegel 10 parallel zur Rotorachse.

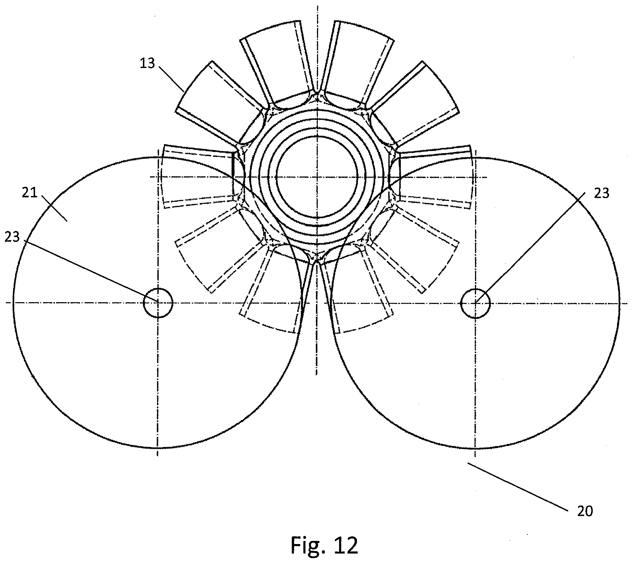

Bei dem in Fig. 10 gezeigten Verfahren wurde ein Magnetlagerelement 17 aus einem rotorseitigen Magnetlagerelement 18 des Rotors 13 entfernt, um auch letzteres mit dem Strahl 1d erreichen und bearbeiten zu können. Da das Magnetlagerelement 17 nicht mehr die erforderliche Rotorabstützung gewährleisten kann, ist für den Rotor ein zweites Lagerelement 20 vorgesehen, welches unten anhand von Fig. 12 näher erläutert wird.

Der in Fig. 11 gezeigte Verfahrensschritt umfasst eine Korrektur des Magnetlagerelements 18 durch den Laserstrahl 1d, der das Magnetlagerelement 18 lokal erwärmt und so dessen magnetischen Eigenschaften in der gewünschten Weise lokal verändert.

Eine mögliche Ausführungsform des zweiten Lagerelements 20 ist in Fig. 12 gezeigt. Das zweite Lagerelement 20 umfasst zwei Rollen oder Reibräder 21, die jeweils um eine Achse 23 drehbar gelagert sind. Die Reibräder 21 bilden gemeinsam ein Auflager für den Rotor 13. Der Rotor 13 liegt also lediglich auf den Reibrädern 21 mit seiner Gewichtskraft auf.

Wenigstens eines der Reibräder 21 umfasst einen nicht dargestellten Drehantrieb, um den Rotor 13 durch Reibschluss zu einer Rotation anzutreiben. Hierdurch kann der Rotor 13 gedreht und je nach Bedarf, insbesondere zum Zwecke einer Grobausrichtung, gegenüber dem Laser 1 ausgerichtet werden.

Zumindest eines der Reibräder 21 kann beispielsweise durch einen Schrittmotor oder Servomotor und beispielsweise eine dazwischen befindliche Getriebestufe motorisiert sein. Dies kann zur Drehung des Rotors in eine bestimmte Winkellage genutzt werden. Die Antriebskomponenten sind in der Abbildung nicht dargestellt.

Eine Drehung des Rotors 13, zum Beispiel angetrieben durch die Reibräder 21, kann beispielsweise auch den Zugang des Laserstrahls 1d an eine Innenseite Magnetlagerelements 18 erleichtern. Bei einer geeigneten Wahl der Laserstrahlquelle und der Strahlparameter ist eine Korrektur eines Magnetlagerfehlers möglich, z.B. zur Zentrierung des Rotors.

Wie in den Fig. 10 und 11 erkennbar ist, bilden die Reibräder 21 bzw. das zweite Lagerelement 20 eine flache Einheit. Daher können sie zwischen zwei Rotorscheiben 18 an den Rotor 13 herangefahren werden, um diesen abzustützen.

Alternativ zu den zwei Reibrädern 21 sind auch andere, beispielsweise kraftschlüssige Drehmomentübertragungseinrichtungen für einen rotatorischen Antrieb des Rotors, insbesondere in Kombination mit einer bei Bedarf separaten Rotorabstützung denkbar. Beispielsweise kann der Rotor 13 auch durch Formschluss zu einer Drehung angetrieben werden. Auch ist beispielsweise eine magnetische, pneumatische und/oder hydraulische Kraftübertragug möglich. Dabei kann der Rotor bei allen Lösungen z.B. radial und/oder axial unterstützt und angetrieben werden.

In Fig. 13 sind ein Rotor 13 und eine Anordnung zum Abführen von abgetragenem Material mittels eines Luftstromes gezeigt. Beispielhaft ist die genannte Anordnung hier benachbart zu einer antriebsseitigen Wuchtebene angeordnet. Mittels dieser Anordnung kann eine großflächige Anhaftung und Ablagerung von ablatierten Partikeln am Rotor 13 und angrenzenden Bauteilen, z.B. an der Vorrichtung 1b, der Lagerfassung 19, dem zweitem Lagerelement 20, einem Kugellager oder ähnlichem vermieden werden.

Zur Erzeugung des Luftstromes ist eine Absaugvorrichtung 27 vorgesehen. Eine solche kann vorteilhaft auch an mehreren oder allen Wuchtebenen vorgesehen sein. Die Vorrichtung 27 kann auch variabel positionierbar sein. Insbesondere weist die Absaugvorrichtung 27 eine optimierte Strömungsgeometrie auf.

Die Abführung abgetragener Materialpartikel wird weiter verbessert, indem zusätzlich eine aktive Luftzuführung vorgesehen ist. Die aktive Luftzuführung umfasst eine Druckluftdüse 24 mit einem Druckluftanschluss 26 und mit einem Ausgang 25 der Druckluftdüse 24. Die aktive Luftzuführung und die Absaugvorrichtung 27 sind relativ zu einem zur Bearbeitung vorgesehenen Flächenabschnitt 31, welcher am Wuchtring 14 angeordnet ist, derart positioniert und ausgerichtet, dass die abgetragenen Partikel vom Luftstrom aus der Düse 24 mitgerissen werden und anschließend von der Absaugvorrichtung 27 angesaugt und abgeführt werden.

Die von dem Düsenausgang 25 über den Flächenabschnitt 31 zur Absaugvorrichtung 27 hin gerichtete Luftströmung verläuft im Wesentlichen senkrecht zur Richtung des Laserstrahls 1b und parallel zur Oberfläche des Flächenabschnitts 31. Die relativ leichten Materialpartikel, welche bei einem laserbasierten Materialabtragungsprozess mit Sublimation und Schmelzaustrieb entstehen, lassen sich hierdurch einfach abführen. Je kürzer die Laserpulse sind, desto höher ist im Allgemeinen der Anteil an sublimiertem Material.

Die Absaugleistung der Absaugvorrichtung 27, üblicherweise ausgedrückt in m3/min, ist vorteilhafterweise an einem Eingang der Absaugvorrichtung 27 deutlich größer als das durch die aktive Luftzuführung in den Abtragungsbereich eingetragene Luftvolumen pro Zeit. Hierdurch wird die Wirksamkeit der Materialabführung weiter verbessert, da im gesamten Abtragungsbereich eine Luftströmung in Richtung der Absaugvorrichtung 27 erzeugt wird.

Eine ähnliche Maßnahme kann auch jenseits der Wuchtvorrichtung 1b zur Vermeidung einer Kontamination von Bauteilen durch abgetragener Materialpartikel vorgesehen werden. So kann beispielsweise zur Verhinderung einer Kontamination des Spiegels 10 durch ablatierte Partikel dieser durch einen Luftstrom vor Verunreinigungen geschützt oder eine solche beseitigt werden. Es können beispielsweise ein kontinuierlicher Luftstrom und/oder einzelne Luftstöße mit oder ohne Absaugung vorgesehen sein.

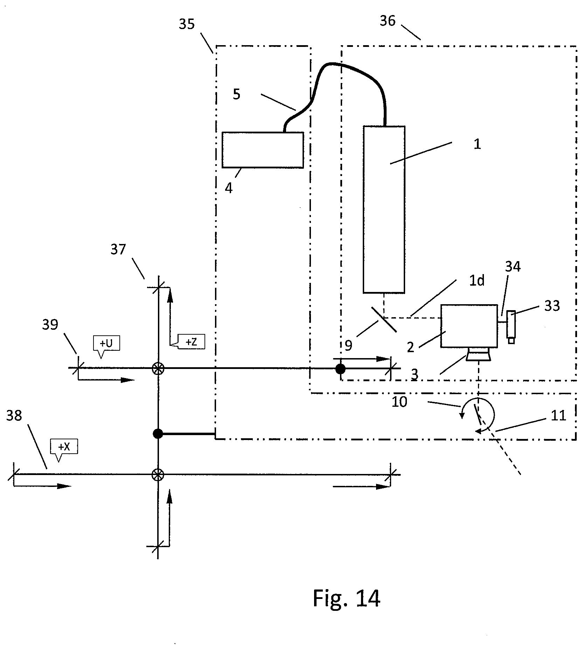

Um einen reproduzierbaren Materialabtrag zu gewährleisten, ist es vorteilhaft, dass der Laserfokus immer - auch nach einem Wechsel zu einer anderen Ablationsstelle oder Wuchtebene - einen im Wesentlichen identischen Abstand von der Ablationsoberfläche des abzutragenden Flächenabschnitts aufweist. Denn außerhalb des Laserfokus liegt eine andere Strahlintensität des Laserstrahls 1d vor und entsprechend ändert sich die Materialabtragsrate. Insbesondere ist eine Positionierung des Laserfokus mit einer Abweichung von weniger als 0,1 mm vorteilhaft. Um diese zu gewährleisten und/oder um neue Rotorbaugrößen auf der Anlage einzulernen, ist gemäß Fig. 14 am Scanner 2 mittels eines Halters 34 eine als Laserabstandsmesser 33 ausgebildete Wegmesseinrichtungen befestigt.

Um die Lage der Wegmesseinrichtung relativ zu dem Scanner 2 einstellen zu können, weist das Befestigungselement 34 eine nicht näher dargestellte, manuelle Einstellmöglichkeit mit Arretierung auf.

Die Wegmesseinrichtung kann eine Wegstrecke des Laserstrahls 1d vermessen, beispielsweise mittels eines Lasertriangulationssensors und/oder akustisch oder anhand anderer, insbesondere optischer Verfahren. Bei einem akustischen Verfahren wird die Schallemission bei der Laserablation durch Verfahren des Laserfokus relativ zur Bearbeitungsebene maximiert, um den Einstellpunkt zu erreichen, bei dem der Laserfokus genau auf der Bearbeitungsebene liegt. Eine Schallaufnahme ist beispielsweise mittels Mikrofon und evtl. FFT-Auswertung der aufgenommenen Signale möglich. Ferner kann auch entsprechend eine entstehende Sekundäremission, beispielsweise von einem bei der Materialabtragung erzeugten Plasma, maximiert werden.

Der Laser 1 und der Scanner 2 sind relativ zu dem Spiegel 10 bewegbar. Der Laser 1 und der Scanner 2 bilden dabei eine Bewegungseinheit 36. Diese umfasst hier außerdem den Spiegel 9, die Wegmesseinrichtung 33 und das Objektiv 3. Der Spiegel 10 ist Teil einer weiteren Bewegungseinheit 35, die hier auch die Steuereinrichtung 4 für den Laser 1 umfasst. Die Bewegungseinheiten 35 und 36 sind also relativ zueinander bewegbar.

Die Bewegungseinheiten 35 und 36 sind durch ein Portalsystem mit zwei Achsen 37 und 38 relativ zu dem Rotor 13, der in Fig. 14 nicht gezeigt ist, positionierbar. Somit kann der Laserstrahl 1d durch Wahl der Winkelstellung des drehbaren Spiegels 10 und der Positionen auf den Achspositionen 37 und 38 den Materialabtrag an allen Wuchtebenen des Rotors 13 vornehmen. Es ist außerdem eine dritte Achse 39 vorgesehen, mittels der die Bewegungseinheit 36 relativ zu der Bewegungseinheit 35 und somit zum Spiegel 10 linear verschoben werden kann.

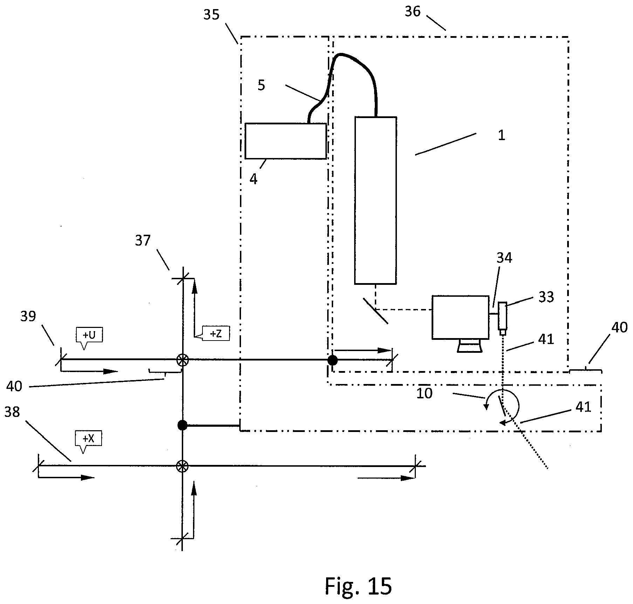

In Fig. 14 sind die Bewegungseinheiten 35 und 36 in einer Relativposition gezeigt, in der der Laserstrahl 1d auf den Spiegel 10 und einen entsprechenden abzutragenden Flächenabschnitt des Rotors 13 ausgerichtet ist. In Fig. 15 ist die Bewegungseinheit 36 gegenüber der Bewegungseinheit 35 um einen Betrag 40 derart verschoben, dass anstelle des Laserstrahls 1d ein Messstrahl 41 der Wegmesseinrichtung 33 auf den Spiegel 10 und damit den Flächenabschnitt ausgerichtet ist. Die Wegmesseinrichtung 33 ist in Fig. 15 also in den Strahlengang des Laserstrahls 1d eingefahren und der Messstrahl 41 beschreibt den gleichen Weg zum abzutragenden Flächenabschnitt wie in Fig. 14 der Laserstrahl 1d. Somit kann in präziser Weise genau die vom Laserstrahl 1d zurückgelegte Wegstrecke gemessen werden, um dessen Fokus, insbesondere durch Justierung der Achsen 37 und/oder 38, insbesondere bei einer Grobausrichtung, exakt auf dem Flächenabschnitt des Rotors zu positionieren.

Alternativ zum beschriebenen Aufbau können beispielsweise der Laser 1 und/oder die als Scanner 2 ausgebildete optische Einheit für den Laser 1 starr auf der Achse 37 befestigt werden. Der Spiegel 10 wird in diesem Fall beispielsweise auf der Achse 39 angebracht.

Ein Messen der Wegstrecke des Laserstrahls 1d kann auch an mehreren oder allen Wuchtebenen ausgeführt werden. Vor einer jeweiligen Materialabtragung kann die Wegstrecke beispielsweise gemessen werden, um einen Rotor, beispielsweise mit einer anderen Größe und/oder anderer Lage der Wuchtebenen, einzulernen, um variierende Rotorgrößen und Lagen der Wuchtebenen im Rahmen von Zeichnungstoleranzen und/oder Toleranzketten am Rotor auszugleichen und/oder um bereits vorhandene Ablationsstellen an allen Wuchtebenen eines Rotors während einer langsamen Drehung des Rotors um seine Achse, beispielsweise angetrieben durch das zweite Lagerelement 20, einzumessen.

Die Wegmesseinrichtung 33 kann beispielsweise das Messprinzip der Laufzeitmessung, der Triangulation und/oder der Interferenzmessung anwenden.

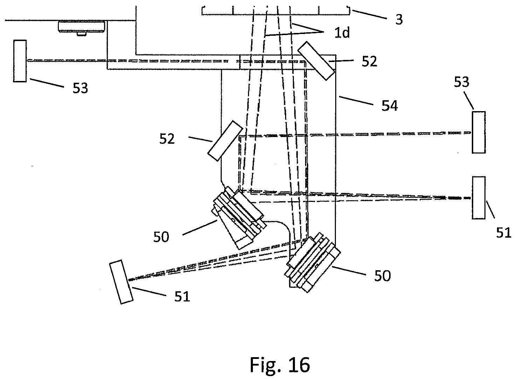

In den Fig. 16 bis 21 werden weitere Mittel zur Grobausrichtung und Wegstreckenmessung des Laserstrahls 1d dargestellt, die insbesondere alternativ zum drehbaren Spiegel 10 vorgesehen werden können.

In Fig. 16 sind zwei statische Spiegel 50 gezeigt, die eine Grobausrichtung des Laserstrahls 1d in verschiedene, nahezu entgegengesetzte Richtungen ermöglichen. Die Spiegel 50 sind in einer Spiegelhalterung 54 montiert. Zur Auswahl einer jeweiligen Wuchtebene bzw. eines abzutragenden Flächenabschnitts 51 und eines hierauf gerichteten, entsprechenden Spiegels 50 wird der Laserstrahl 1d auf den jeweiligen Spiegel 50 ausgerichtet. Dies geschieht bei der Ausführungsform der Fig. 16 mittels zweier im Scanner 2 angeordneter beweglicher Spiegel. Diese werden hierbei sowohl zur Grobausrichtung des Laserstrahls 1d auf den gewünschten abzutragenden Flächenabschnitt 51 als auch zur Feinausrichtung beim Materialabtrag eingesetzt.

Für eine Vermessung der Wegstrecken des Laserstrahls 1d werden zwei weitere fest montierte Spiegel 52, die ebenfalls an der Spiegelhalterung 54 befestigt sind, sowie zwei als Messlaser 53 ausgebildete Wegmesseinrichtungen genutzt. Ein dritter Messlaser, beispielsweise für eine Vermessung einer Wuchtebene und eines Flächenabschnitts am Außenumfang des Rotors, z.B. an der Labyrinthnabe 15, kann vorteilhafterweise ohne zwischengeschalteten Spiegel auf die Wuchtebene bzw. den abzutragenden Flächenabschnitt ausgerichtet sein, insbesondere um eine Wegstrecke eines Laserstrahls 1d zu messen, der ebenfalls direkt auf den abzutragenden Flächenabschnitt ausgerichtet ist.

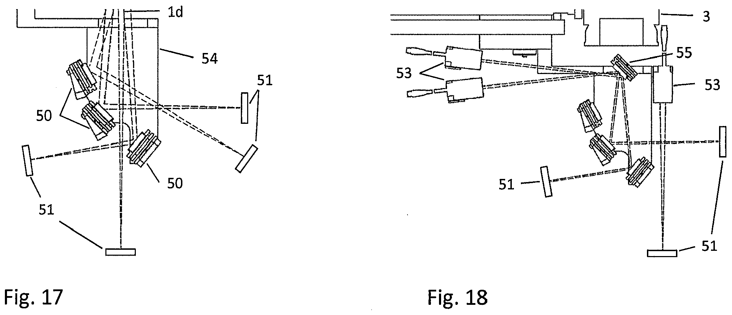

In Fig. 17 ist eine ähnliche Spiegelhalterung 54 gezeigt, die jedoch 3 fest montierte Spiegel 50 zum Erreichen einzelner Wuchtebenen 51 und/oder einer Oberfläche eines Magnetlagers zu dessen Korrektur aufweist.

In Fig. 18 ist die Spiegelhalterung 54 der Fig. 17 mit einer Anordnung von Wegmesseinrichtungen gezeigt. Für eine Vermessung wird ein zusätzlicher Spiegel 55 unterhalb des Scanners 2, von dem hier nur das Objektiv 3 sichtbar ist, in den Strahlengang des Lasersstrahls 1d eingefahren, um eine Einkopplung des Strahlengangs zweier Messlaser 53 zu ermöglichen, wobei ein derartiger Spiegel 55 auch beispielsweise für lediglich einen Messlaser 53 vorgesehen werden kann. Die Vorrichtung der Fig. 18 umfasst insgesamt drei Messlaser 53, von denen einer direkt auf einen Flächenabschnitt 51 gerichtet ist.

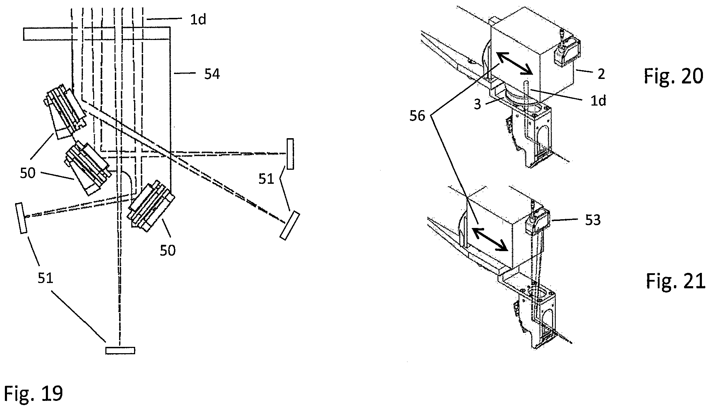

Eine weitere Möglichkeit zur Grobausrichtung und Wegstreckenmessung ist in den Fig. 19 bis 21 gezeigt. Hierbei finden ebenfalls drei fest montierte Spiegel 50 Verwendung. Im Unterschied zu den Ausführungsformen der Fig. 16 bis 18 werden hier die jeweiligen Spiegel 50 und die dazugehörigen Flächenabschnitte 51 durch eine lineare Verschiebung des Scanners 2 relativ zu der Spiegelhalterung 54, wie sie in Fig. 20 durch Verschiebung 56 angedeutet ist, ausgewählt. Bei einer der in Fig. 19 dargestellten Stellungen des Laserstrahls 1d ist ein Flächenabschnitt 51 unmittelbar ausgewählt, wobei der Laserstrahl 1d nicht von einem Spiegel 50 abgelenkt wird.

Wie in den Figuren 20 und 21 gezeigt, ist am Scanner 2 eine als Messlaser 53 ausgebildete Wegmesseinrichtung befestigt. Der Messlaser 53 weist dabei eine zum Laserstrahl 1d parallele Orientierung auf.

Durch die Verschiebung 56 des Scanners 2 wird der Messlaser 53 in den Strahlengang des Laserstrahls 1d eingefahren und auf die Spiegel 50 der Spiegelhalterung 54 ausgerichtet. Damit trifft der Strahlengang des Messlasers 53 immer aus derselben Richtung wie der Laserstrahl 1d, hier aus vertikaler Richtung, auf die unterschiedlichen Spiegel 50 und wird auf die entsprechenden Wuchtebenen bzw. Flächenabschnitte 51 umgelenkt. Auch für die Vermessung der einzelnen Flächenabschnitte 51 wird die Verschiebung 56 genutzt um für den Messlaser 53 den entsprechenden Spiegel 50 auszuwählen.

Allgemein ist auch ein Verfahren zum Wuchten eines Rotors einer Vakuumpumpe, insbesondere Turbomolekularpumpe, denkbar, bei dem eine Unwucht des Rotors ermittelt wird und Material von dem Rotor mittels eines Lasers in Abhängigkeit von der ermittelten Unwucht abgetragen wird, um die Unwucht zu verringern, wobei eine Mehrzahl an Flächenabschnitten am Rotor zur Materialabtragung vorgesehen ist und für wenigstens zwei der Flächenabschnitte ein separater Laser und/oder eine separate optische Einheit (z.B. ein vorstehend beschriebener Scanner) für den oder die Laser vorgesehen ist. Beispielsweise sind zwei oder mehr Scanner vorgesehen, mit denen sich in unterschiedliche Flächenabschnitte bearbeiten lassen. Diese optischen Einheiten können zur Anpassung ihrer Position und/oder Lage im Raum verschiebar und/oder verschwenkbar angeordnet sein, um eine Grobausrichtung des Strahls zu ermöglichen. Hierdurch kann ein einfacher Aufbau realisiert werden und insbesondere auf einen translatorisch bewegten Spiegel wie den Spiegel 10 verzichtet werden. Bei einer Ausführungsform könnte für jeden Flächenabschnitt und/oder Ablationsebene des Rotors einen separater Scanner, beispielsweise Scanner 2, mit Optik, beispielsweise Optik 3, vorgesehen sein. Die Speisung aller Scanner könnte mit separaten Strahlquellen (z.B. Laser) oder einer einzelnen mit entsprechender Strahlweiche geschehen. Es können auch Untergruppen der Gesamtheit der Scanner von einer Strahlungsquelle gemeinsam gespeist werden. Je nach Ausführung dieser Lösung kann evtl. auf eine Grobpositionierung aller oder einzelner Scanner verzichtet werden.

### Bezugszeichenliste

- 1: Lager
- 1b: Vorrichtung
- 1c: Lagerfassung
- 1d: Laserstrahl
- 2: Scanner
- 3: Objektiv
- 4: Steuereinrichtung
- 5: Leitung
- 9: Spiegel
- 10: Spiegel
- 13: Rotor
- 13a: Turbostufe
- 13b: Holweckstufe
- 14: Wuchtring
- 15: Labyrinthnabe
- 16: Rotorscheibe
- 17: Magnetlagerelement
- 18: Magnetlagerelement
- 20: zweites Lagerelement
- 21: Reibrad
- 23: Achse
- 24: Druckluftdüse
- 25: Ausgang
- 26: Druckluftanschluss
- 27: Absaugvorrichtung
- 31: Flächenabschnitt
- 33: Wegmesseinrichtung
- 34: Halter
- 37: Achse
- 38: Achse
- 39: Achse
- 40: Betrag
- 41: Messstrahl
- 50: Spiegel
- 51: Flächenabschnitt
- 52: Spiegel
- 53: Messlaser
- 54: Spiegelhalterung
- 55: Spiegel
- 56: Verschiebung
- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

## Patentansprüche

1. Verfahren zum Wuchten eines Rotors (13) einer Vakuumpumpe, insbesondere Turbomolekularpumpe, bei dem
eine Unwucht des Rotors (13) ermittelt wird und
Material von dem Rotor (13) mittels eines Lasers (1) in Abhängigkeit von der ermittelten Unwucht abgetragen wird, um die Unwucht zu verringern, wobei zum Abtragen des Materials der Rotor (13) auf eine Drehzahl gebracht wird, die deutlich kleiner ist als eine beim Ermitteln der Unwucht vorgesehene Drehzahl, insbesondere wobei der Rotor (1) zum Abtragen des Materials in Stillstand versetzt wird,
**dadurch gekennzeichnet, dass**
die Unwucht bei wenigstens zwei Drehzahlen des Rotors (13) ermittelt wird, wobei nach jedem Ermitteln einer zu verringernden Unwucht für eine Drehzahl der Rotor (13) auf die deutlich geringere Drehzahl gebracht, insbesondere in Stillstand versetzt, wird und Material vom Rotor (13) abgetragen wird.

2. Verfahren nach Anspruch 1,
wobei zumindest ein erstes Lagerelement (17) vorgesehen ist, durch welches der Rotor (13) beim Ermitteln der Unwucht gelagert wird,
wobei das erste Lagerelement (17) für das Abtragen des Materials von dem Rotor (13) entfernt wird, und
wobei für das Abtragen von Material zumindest ein zweites Lagerelement (20) an den Rotor zu dessen Lagerung angebracht wird.

3. Verfahren nach Anspruch 2,
**dadurch gekennzeichnet, dass**
das zweite Lagerelement (20) dazu ausgebildet ist, den Rotor (13) zu einer Drehung anzutreiben und/oder dass das zweite Lagerelement (20) radial an den Rotor (13) herangefahren wird und/oder ein Auflager für den Rotor (13) bildet.

4. Verfahren nach Anspruch 1,
wobei das durch den Laser (1) abgetragene Material mittels eines Luftstromes aus dem Bereich der Materialabtragung abgeführt wird.

5. Verfahren nach Anspruch 4,
**dadurch gekennzeichnet, dass** der Luftstrom quer zum Strahl (1d) des Lasers (1) verläuft.

6. Verfahren nach Anspruch 4 oder 5,
**dadurch gekennzeichnet, dass** der Luftstrom durch eine aktive Luftzufuhr (24) und/oder eine Absaugung (27) erzeugt wird.

7. Verfahren nach Anspruch 1,
wobei eine Wegstrecke eines Strahls (1d) des Lasers (1) gemessen wird und der Strahl (1d) in Abhängigkeit der gemessenen Wegstrecke ausgerichtet wird.

8. Verfahren nach Anspruch 7,
**dadurch gekennzeichnet, dass**
eine optische Wegmesseinrichtung (33, 53) vorgesehen ist, wobei die Wegmesseinrichtung (33, 53) und/oder eine optische Einheit (55) für die Wegmesseinrichtung (33, 53) zum Messen der Wegstrecke des Strahls (1d) in dessen Weg eingebracht wird.

9. Verfahren nach wenigstens einem der vorhergehenden Ansprüche,
wobei für einen Strahl (1d) des Lasers (1) eine Grobausrichtung und eine Feinausrichtung durchgeführt werden,
wobei die Grobausrichtung ein Ausrichten des Strahls (1d) auf einen Flächenabschnitt (31, 51) des Rotors (13) umfasst, der zur Materialabtragung vorgesehen ist,
wobei die Grobausrichtung mittels zumindest eines ersten Spiegels (10) durchgeführt wird, der relativ zum Rotor (13) translatorisch bewegt wird, und wobei bei der Feinausrichtung die Ausrichtung des Strahls (1d) ausgehend von der Grobausrichtung variiert wird, um ein gezieltes Abtragen des Materials im Bereich des Flächenabschnitts (31, 51) zu bewirken.

10. Verfahren nach Anspruch 9,
**dadurch gekennzeichnet, dass**
der erste Spiegel (10) verschwenkt wird.

11. Verfahren nach Anspruch 9 oder 10,
**dadurch gekennzeichnet, dass**
der erste Spiegel (10) mit dem Laser (1) und/oder einer optischen Einheit (2, 3) für den Laser (1) verbunden ist, sodass der erste Spiegel (10) bei der Grobausrichtung gemeinsam mit dem Laser (1) bzw. der optischen Einheit (2, 3) für den Laser (1) translatorisch bewegt wird, insbesondere wobei der erste Spiegel (10) relativ zum Laser (1) bzw. zu der optischen Einheit (2, 3) für den Laser (1) bewegt, verschwenkt oder gedreht wird.

12. Verfahren nach einem der Ansprüche 9 bis 11,
**dadurch gekennzeichnet, dass**
die Feinausrichtung mittels zumindest eines zweiten Spiegels, und insbesondere zumindest eines dritten Spiegels, durchgeführt wird.

13. Verfahren nach einem der Ansprüche 9 bis 12,
**dadurch gekennzeichnet, dass**
der Strahl (1d), insbesondere durch die Grobausrichtung, derart ausgerichtet wird, dass sich ein für den Materialabtrag vorgesehener Flächenabschnitt zumindest im Wesentlichen in einer Fokusebene des Strahls (1d) befindet.

14. Verfahren nach einem der Ansprüche 9 bis 13,
**dadurch gekennzeichnet, dass**
Material bei im Wesentlichen atmosphärischem Druck abgetragen wird.

## Claims

1. A method of balancing a rotor (13) of a vacuum pump, in particular of a turbomolecular pump, in which
an imbalance of the rotor (13) is determined and
material is removed from the rotor (13) by means of a laser (1) in dependence on the determined imbalance in order to reduce the imbalance, wherein, in order to remove the material, the rotor (13) is brought to a rotational speed which is considerably lower than a rotational speed provided on the determination of the imbalance, in particular with the rotor (1) being brought to a standstill to remove the material,
**characterized in that**
the imbalance is determined at at least two rotational speeds of the rotor (13),
with, after each determination of an imbalance to be reduced for a rotational speed, the rotor (13) being brought to the considerably lower rotational speed, in particular being brought to a standstill, and material being removed from the rotor (13).

2. A method in accordance with claim 1,
wherein at least a first bearing element (17) is provided by which the rotor (13) is supported on the determination of the imbalance,
wherein the first bearing element (17) is removed from the rotor (13) for the removal of the material, and
wherein, for the removal of material, at least a second bearing element (20) is attached to the rotor for supporting the rotor.

3. A method in accordance with claim 2,
**characterized in that**
the second bearing element (20) is configured to drive the rotor (13) to make a rotation; and/or **in that** the second bearing element (20) is moved radially toward the rotor (13) and/or forms a support for the rotor (13).

4. A method in accordance with claim 1,
wherein the material removed by the laser (1) is removed from the region of the material removal by means of an air flow.

5. A method in accordance with claim 4,
**characterized in that**
the air flow runs transversely to the beam (1d) of the laser (1).

6. A method in accordance with claim 4 or claim 5,
**characterized in that**
the air flow is generated by an active air supply (24) and/or by a suction (27).

7. A method in accordance with claim 1,
wherein a path distance of a beam (1d) of the laser (1) is measured and the beam (1d) is oriented in dependence on the measured path distance.

8. A method in accordance with claim 7,
**characterized in that**
an optical path measuring device (33, 53) is provided, with the path measuring device (33, 53) and/or an optical unit (55) for the path measuring device (33, 53) being introduced into the path of the beam (1d) to measure the path distance of said beam (1d).

9. A method in accordance with at least one of the preceding claims,
wherein a rough alignment and a fine alignment are performed for a beam (1d) of the laser (1),
wherein the rough alignment comprises aligning the beam (1d) with a surface section (31, 51) of the rotor (13) which is provided for the material removal,
wherein the rough alignment is performed by means of at least a first mirror (10) which is moved in a translatory manner relative to the rotor (13), and wherein, in the fine alignment, the alignment of the beam (1d) is varied, starting from the rough alignment, to bring about a targeted removal of the material in the region of the surface section (31, 51).

10. A method in accordance with claim 9,
**characterized in that**
the first mirror (10) is pivoted.

11. A method in accordance with claim 9 or claim 10,
**characterized in that**
the first mirror (10) is connected to the laser (1) and/or to an optical unit (2, 3) for the laser (1) so that the first mirror (10) is moved in a translatory manner together with the laser (1) or the optical unit (2, 3) for the laser (1) during the rough alignment, in particular with the first mirror (10) being moved, pivoted or rotated relative to the laser (1) or to the optical unit (2, 3) for the laser (1).

12. A method in accordance with any one of the claims 9 to 11,
**characterized in that**
the fine alignment is performed by means of at least a second mirror, and in particular by means of at least a third mirror.

13. A method in accordance with any one of the claims 9 to 12,
**characterized in that**
the beam (1d) is aligned, in particular by the rough alignment, such that a surface section provided for the material removal is located at least substantially in a focal plane of the beam (1d).

14. A method in accordance with any one of the claims 9 to 13,
**characterized in that**
material is removed at substantially atmospheric pressure.

## Revendications

1. Procédé d'équilibrage d'un rotor (13) d'une pompe à vide, en particulier d'une pompe turbomoléculaire, dans lequel
un balourd du rotor (13) est déterminé, et
en fonction du balourd déterminé, de la matière est enlevée du rotor (13) au moyen d'un laser (1), afin de réduire le balourd,
pour enlever la matière, le rotor (13) est amené à une vitesse de rotation qui est sensiblement inférieure à une vitesse de rotation prévue pour la détermination du balourd, et
en particulier, pour enlever la matière, le rotor (1) est amené à l'arrêt, **caractérisé en ce que**
le balourd est déterminé à au moins deux vitesses de rotation du rotor (13), et
après chaque détermination d'un balourd à réduire, pour une vitesse de rotation, le rotor (13) est amené à la vitesse de rotation sensiblement inférieure, en particulier il est amené à l'arrêt, et de la matière est enlevée du rotor (13).

2. Procédé selon la revendication 1,
dans lequel
il est prévu au moins un premier élément de palier (17) par lequel le rotor (13) est supporté lors de la détermination du balourd,
le premier élément de palier (17) est retiré du rotor (13) pour l'enlèvement de la matière, et
au moins un deuxième élément de palier (20) est fixé au rotor pour le supporter, pour l'enlèvement de la matière.

3. Procédé selon la revendication 2,
**caractérisé en ce que**
le deuxième élément de palier (20) est réalisé pour entraîner le rotor (13) en rotation, et/ou **en ce que**
le deuxième élément de palier (20) est approché radialement du rotor (13) et/ou forme un support pour le rotor (13).

4. Procédé selon la revendication 1,
dans lequel
la matière enlevée par le laser (1) est évacuée hors de la zone d'enlèvement de matière au moyen d'un flux d'air.

5. Procédé selon la revendication 4,
**caractérisé en ce que**
le flux d'air s'étend transversalement au faisceau (1d) du laser (1).

6. Procédé selon la revendication 4 ou 5,
**caractérisé en ce que**
le flux d'air est généré par une alimentation en air active (24) et/ou par une aspiration (27).

7. Procédé selon la revendication 1,
dans lequel
un trajet d'un faisceau (1d) du laser (1) est mesuré et le faisceau (1d) est aligné en fonction du trajet mesuré.

8. Procédé selon la revendication 7,
**caractérisé en ce que**
il est prévu un dispositif optique de mesure de trajet (33, 53), et le dispositif de mesure de trajet (33, 53) et/ou une unité optique (55) pour le dispositif de mesure de trajet (33, 53) est introduit(e) dans le trajet du faisceau (1d) pour mesurer son parcours.

9. Procédé selon l'une au moins des revendications précédentes,
dans lequel
on effectue un alignement grossier et un alignement fin pour un faisceau (1d) du laser (1),
l'alignement grossier comprend un alignement du faisceau (1d) sur une portion de surface (31, 51) du rotor (13) prévue pour l'enlèvement de matière, l'alignement grossier est réalisé au moyen d'au moins un premier miroir (10) qui est déplacé en translation par rapport au rotor (13), et
lors de l'alignement fin, l'alignement du faisceau (1d) est varié à partir de l'alignement grossier, afin d'assurer un enlèvement ciblé de la matière dans la zone de la portion de surface (31, 51).

10. Procédé selon la revendication 9,
**caractérisé en ce que**
le premier miroir (10) est pivoté.

11. Procédé selon la revendication 9 ou 10,
**caractérisé en ce que**
le premier miroir (10) est relié au laser (1) et/ou à une unité optique (2, 3) pour le laser (1), de sorte que lors de l'alignement grossier, le premier miroir (10) est déplacé en translation conjointement avec le laser (1) ou avec l'unité optique (2, 3) pour le laser (1),
en particulier, le premier miroir (10) est déplacé, pivoté ou tourné par rapport au laser (1) ou à l'unité optique (2, 3) pour le laser (1).

12. Procédé selon l'une des revendications 9 à 11,
**caractérisé en ce que**
l'alignement fin est effectué au moyen d'au moins un deuxième miroir et en particulier au moyen d'au moins un troisième miroir.

13. Procédé selon l'une des revendications 9 à 12,
**caractérisé en ce que**
le faisceau (1d) est aligné, en particulier par l'alignement grossier, de telle manière qu'une portion de surface destinée à l'enlèvement de matière soit située au moins sensiblement dans un plan focal du faisceau (1d).

14. Procédé selon l'une des revendications 9 à 13,
**caractérisé en ce que**
la matière est enlevée à une pression sensiblement atmosphérique.
